# EUROPEAN PATENT APPLICATION

(11) **EP 3 945 377 A1**
(43) Date of publication of application: **02.02.2022**
(21) Application number: 21187962.2
(22) Date of filing: 27.07.2021
(51) Int. Cl.: G05B 15/02

(54) **CONTROL SYSTEM, CONTROL METHOD AND CONTROL PROGRAM**

(30) Priority: 27.07.2020 JP 2020126214
(71) Applicant: TOYOTA JIDOSHA KABUSHIKI KAISHA, Toyota-shi, Aichi-ken 471-8571 (JP)
(72) Inventor: KAKU, Wataru, Aichi-ken, 471-8571 (JP); LEE, Haeyeon, Aichi-ken, 471-8571 (JP); HORI, Tatsuro, Aichi-ken, 471-8571 (JP); WATANABE, Narimasa, Aichi-ken, 471-8571 (JP)
(74) Representative: D Young & Co LLP

(57) **Abstract**

A control system which can accurately differentiate a person from another object while protecting privacy is provided. A control system (1) according to an embodiment of the present disclosure includes a first acquisition unit (2) configured to acquire radar detection information with a detection range being set within a predetermined environment; a second acquisition unit (3) configured to acquire temperature detection information with the detection range being set within the environment; a differentiation unit (4) configured to differentiate whether an object in the environment is a person or another object based on the radar detection information and the temperature detection information; and a control unit (5) configured to control an electric device disposed in the environment based on differentiation result information of whether the object is the person or the other obj ect.

## Description

### BACKGROUND

The present disclosure relates to a control system, a control method, and a control program.

Recently, a technique for controlling an electric device disposed in a predetermined environment based on the presence of a person in the environment has been put into practical use. As disclosed in Japanese Unexamined Patent Application Publication No. 2017-16610, a plurality of sensors such as image sensors are used to detect a person in the environment.

### SUMMARY

The applicant has found the following problem. In Japanese Unexamined Patent Application Publication No. 2017-16610, a plurality of sensors such as image sensors are used to detect a person in the environment. However, there is a concern in terms of privacy protection that detection information acquired by the image sensors or the like may include personal information such as face information that enables identification of individuals.

The present disclosure has been made in view of such a problem, and achieves a control system, a control method, and a control program which can accurately differentiate a person and another object while protecting privacy.

An aspect of the present disclosure is a control system including:
a first acquisition unit configured to acquire radar detection information with a detection range being set within a predetermined environment;
a second acquisition unit configured to acquire temperature detection information with the detection range being set within the environment;
   a differentiation unit configured to differentiate whether an object in the environment is a person or another object based on the radar detection information and the temperature detection information; and
   a control unit configured to control an electric device disposed in the environment based on differentiation result information of whether the object is the person or the other object.

In this manner, a person and another object are differentiated using the radar detection information which enables detection of the object without identifying an individual, and the temperature detection information which makes a difference between the person and the other object without identifying the individual. It is thus possible to accurately differentiate a person and another object while protecting privacy.

In the above control system, the differentiation unit is preferably configured to differentiate the person and the other object based on a temperature distribution in a region corresponding to a region in which the object is indicated by the radar detection information in the temperature detection information.

In the above control system, the differentiation unit is preferably configured to perform learning so that a correct result of the differentiation between the person and the other object can be obtained by supervised learning using, as input information, information about a change in the temperature distribution of the other object in time series, temperature detection information of the person, and physical constitution information of the person, and as output information, differentiation result information of whether the object is the person or the other object.

In the above control system, the electric device is preferably a microphone, and
the control unit is preferably configured to control the microphone so that a sound collecting direction of the microphone is directed toward the differentiated person.

In the above control system, the electric device is preferably a mobile body, and
the control unit is preferably configured to control the mobile body to avoid the differentiated person.

In the above control system,
the electric device is preferably an air conditioner, and
the control unit is preferably configured to control the air conditioner so that a wind direction of the air conditioner is directed to the differentiated person.

In the above control system,
the control unit is preferably configured to turn off power of the electric device when it is determined there is no person in the environment based on the differentiation result information.

Another aspect of the present disclosure is a control method including:
acquiring radar detection information with a detection range being set within a predetermined environment;
acquiring temperature detection information with the detection range being set within the environment;
differentiating whether an object in the environment is a person or another object based on the radar detection information and the temperature detection information; and
controlling an electric device disposed in the environment based on differentiation result information of whether the object is the person or the other obj ect.

In this manner, a person and another object are differentiated using the radar detection information which enables detection of the object without identifying an individual, and the temperature detection information which makes a difference between the person and the other object without identifying the individual. It is thus possible to accurately differentiate a person and another object while protecting privacy.

Another aspect of the present disclosure is a control program causing a computer to execute:
a process of acquiring radar detection information with a detection range being set within a predetermined environment;
a process of acquiring temperature detection information with the detection range being set within the environment;
a process of differentiating whether an object in the environment is a person or another object based on the radar detection information and the temperature detection information; and
a process of controlling an electric device disposed in the environment based on differentiation result information of whether the object is the person or the other obj ect.

In this manner, a person and another object are differentiated using the radar detection information which enables detection of the object without identifying an individual, and the temperature detection information which makes a difference between the person and the other object without identifying the individual. It is thus possible to accurately differentiate a person and another object while protecting privacy.

According to the present disclosure, it is possible to achieve a control system, a control method, and a control program which can accurately differentiate a person and another object while protecting privacy.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 shows a state in which a control system according to a first embodiment is used;
Fig. 2 is a block diagram showing a configuration of the control system according to the first embodiment;
Fig. 3 shows an example of point group information acquired by a first acquisition unit;
Fig. 4 shows an example of temperature detection information acquired by a second acquisition unit;
Fig. 5 is a flowchart showing a flow of controlling a microphone using the control system according to the first embodiment;
Fig. 6 is a flowchart showing a flow of differentiating a person and another object in an differentiation unit according to the first embodiment;
Fig. 7 is a block diagram showing a configuration of a control system according to a second embodiment;
Fig. 8 is a block diagram showing a configuration of a control system according to a third embodiment;
Fig. 9 is a block diagram showing a configuration of a control system according to a fourth embodiment; and
Fig. 10 shows an example of a hardware configuration included in a control system.

### DESCRIPTION OF EMBODIMENTS

Hereinafter, a specific embodiment to which the present disclosure is applied will be described in detail with reference to the drawings. However, the present disclosure is not limited to the following embodiments. In order to clarify the description, the following description and drawings are appropriately simplified.

### [First embodiment]

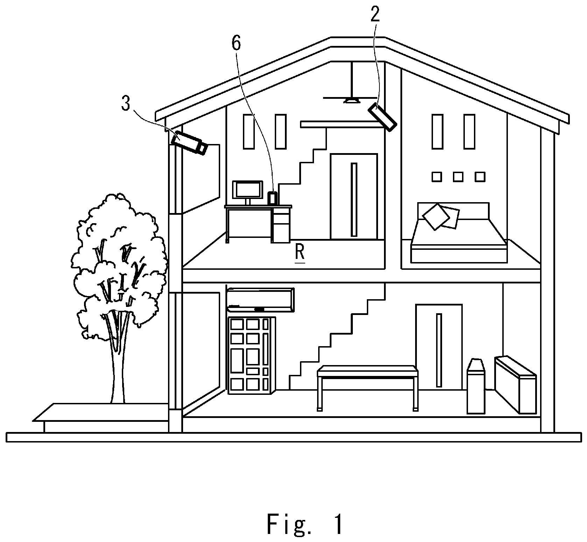

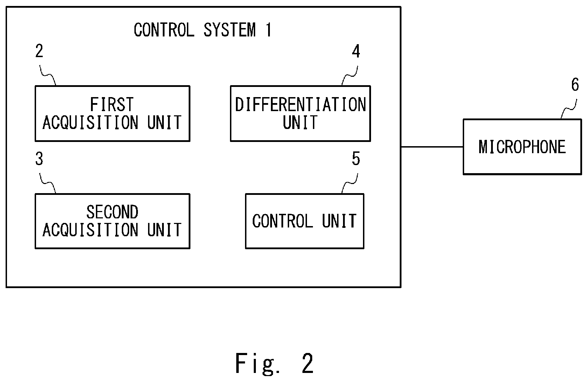

First, a configuration of a control system according to this embodiment will be described. Fig. 1 shows a state in which a control system according to this embodiment is used. Fig. 2 is a block diagram showing a configuration of the control system according to this embodiment.

As shown in Fig. 1, for example, a control system 1 according to this embodiment is suitable for a room R of a house as a predetermined environment. However, the control system 1 can be applied not only to a house but also to a facility where persons do activities.

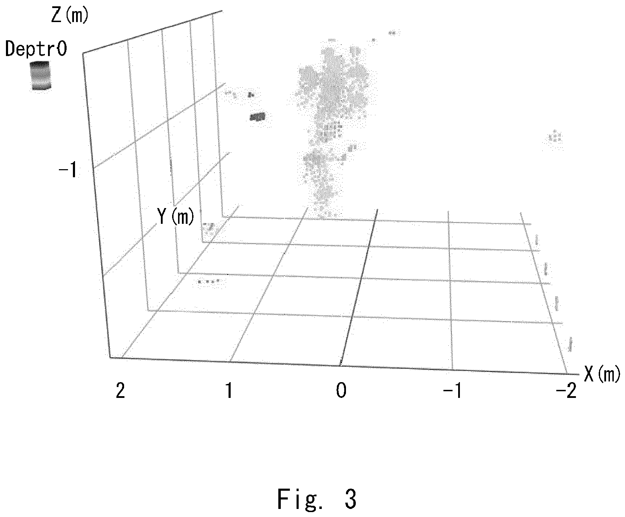

As shown in Figs. 1 and 2, the control system 1 includes a first acquisition unit 2, a second acquisition unit 3, an differentiation unit 4, and a control unit 5. The first acquisition unit 2 acquires radar detection information, the inside of a room R being set as a detection range. Fig. 3 shows an example of point group information acquired by the first acquisition unit. As shown in Fig. 3, the radar detection information is the point group information based on reflected waves from an object present inside the room R. The point group information includes, for example, position information of a world coordinate system inside the room R.

The first acquisition unit 2 includes, for example, a radar sensor, and is fixed to an upper part of the room R so as to look down on the room R, as shown in Fig. 1. The detection range of the first acquisition unit 2 is, for example, an almost entire region of the room R.

However, a fixed position and the detection range of the first acquisition unit 2 may be a fixed position and a detection range, respectively, which enable the first acquisition unit 1 to detect a person(s) present inside the room R. The first acquisition unit 2 is not limited to a configuration in which the first acquisition unit 2 includes the radar sensor, and instead may be configured to acquire the radar detection information from a radar sensor provided outside the first acquisition unit 2. That is, the first acquisition unit 2 may function as an input unit of the radar detection information.

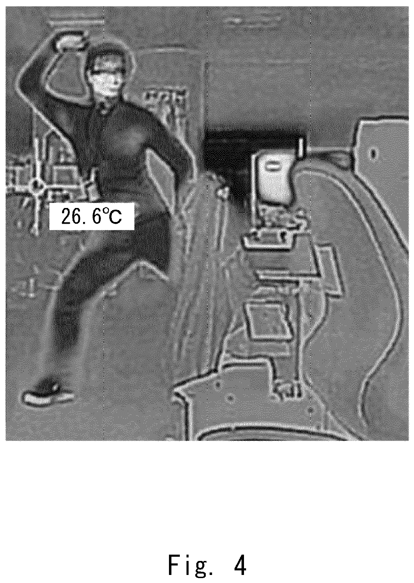

The second acquisition unit 3 acquires temperature detection information, the inside of the room R being set as the detection range. Fig. 4 shows an example of the temperature detection information acquired by the second acquisition unit. Fig. 4 shows an image in which the higher the temperature is, the darker the color becomes. As shown in Fig. 4, the temperature detection information is temperature distribution information of objects present inside the room R. The temperature distribution information includes, for example, position information inside the room R.

The second acquisition unit 3 includes, for example, an infrared camera, and is fixed to an upper part of the room R so as to look down on the room R, as shown in Fig. 1. The detection range of the second acquisition unit 3 is, for example, an almost entire region of the room R.

However, a fixed position and the detection range of the second acquisition unit 3 may be a fixed position and a detection range, respectively, which enable the second acquisition unit 1 to detect a person(s) present inside the room R. The second acquisition unit 3 is not limited to a configuration in which the second acquisition unit 3 includes an infrared camera, and instead may be configured to acquire the temperature detection information from an infrared camera provided outside the second acquisition unit 3. That is, the second acquisition unit 3 may function as an input unit of the temperature detection information.

The differentiation unit 4 differentiates whether an object inside the room R is a person or another object based on the radar detection information and the temperature detection information. The differentiation unit 4, which will be described later in detail, differentiates a person and another object based on the temperature distribution in the area corresponding to the area in which the object is indicated by the radar detection information in the temperature detection information.

The control unit 5 controls the electric device disposed inside the room R based on a result of the differentiation. The control unit 5 controls, for example, a microphone 6 as the electric device. The microphone 6 is, for example, a directional microphone and, as shown in Fig. 1, is disposed inside the room R so as to operate other electric devices such as an air conditioner based on a voice collected from the microphone 6. The microphone 6 is configured to change the direction. However, the microphone 6 only needs to be capable of collecting voices, and the use of the collected voice is not limited.

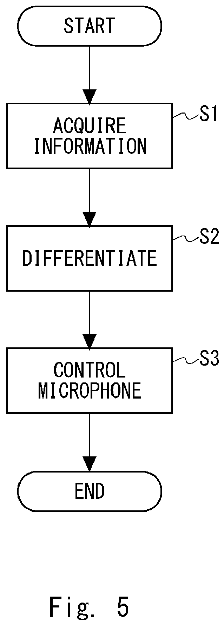

Next, a flow of controlling the microphone 6 using the control system 1 according to this embodiment will be described. Fig. 5 is a flowchart showing a flow of controlling a microphone using the control system according to this embodiment.

First, the differentiation unit 4 acquires the radar detection information inside the room R via the first acquisition unit 2, and acquires the temperature detection information inside the room R via the second acquisition unit 3 (S1). At this time, the radar detection information and the temperature detection information have the position information of the object of the world coordinate system inside the room R.

Next, as described above, the differentiation unit 4 differentiates a person and another object based on the temperature distribution in the area corresponding to the area in which the object is indicated by the radar detection information in the temperature detection information (S2). Since radar waves are reflected by water or metal, the acquired point group information is not information that enables accurate differentiation of a person and another object. Approximate image and shape can be acquired from the point group information, but the acquired point group information is not at a level that enables identification of an individual such as a person face. On the other hand, in regard to the temperature distribution indicated by the temperature detection information, the temperature distribution of a person differs from that of another object.

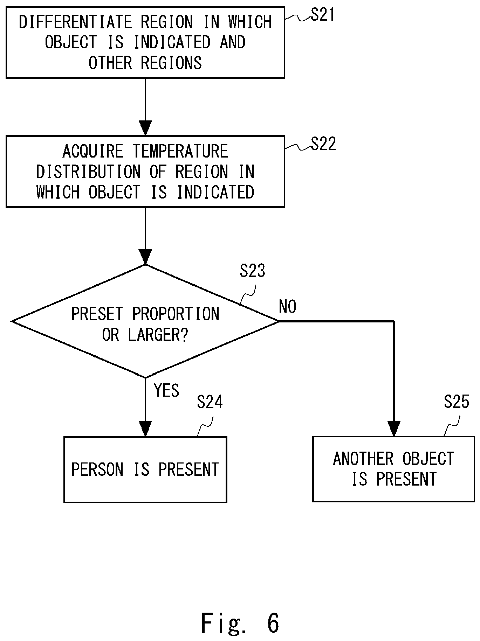

Fig. 6 is a flowchart showing a flow of differentiating a person and another object in the differentiation unit according to this embodiment. The differentiation unit 4 differentiates, for example, a region in which an object present inside the room R is indicated and other regions based on the radar detection information (S21). Then, the differentiation unit 4 acquires a temperature distribution in the region corresponding to a region in which the object is indicated by the radar detection information in the temperature detection information (S22).

At this time, the differentiation unit 4 may acquire the temperature distribution in the area corresponding to the area in which the object is indicated by the radar detection information in the temperature detection information based on the position information in the point group information which is the radar detection information and the position information in the temperature distribution information which is the temperature detection information. When there are a plurality of regions in which the objects are indicated, the differentiation unit 4 acquires the temperature distribution in each of the regions corresponding to the region in which each of the objects is indicated in the temperature detection information.

Furthermore, the differentiation unit 4 determines, based on the temperature distribution in the region in which the object is indicated by the radar detection information in the temperature detection information, whether or not an area of the region in which the object is indicated by the radar detection information in the temperature detection information having a preset temperature or higher is larger than or equal to a preset proportion of the area of the region in which the object is indicated (S23).

If the area having the preset temperature or higher is larger than or equal to the preset proportion of the area in which the object is indicated (YES in S23), the differentiation unit 4 determines that a person is present in the area in which the determination is made (S24). On the contrary, when the area having the preset temperature or higher is less than the the preset proportion of the area in which the object is indicated (NO in S23), the differentiation unit 4 determines that another object is present in the area in which the determination is made (S25). In this manner, the differentiation unit 4 differentiates whether the object of the radar detection information is a person or another object.

The preset temperature and proportion can be set appropriately, for example, to 35 °C and 70%, respectively. In addition, by supervised learning using the temperature detection information of the person and physical constitution information of the person as input information and the temperature and the proportion to be set as output information, learning may be performed so that the correct result of the differentiation between the person and the other object can be obtained.

Here, by supervised learning using the radar detection information indicating the person and the radar detection information indicating another object as the input information, and using differentiation result information indicating whether the object present in the area in which the object is indicated by the radar detection information is the person or the other object as the output information, learning may be performed so that the correct result of the differentiation between the person and the other object can be obtained, and then the area in which the other object is clearly indicated in the radeter detection information may be filtered. Alternatively, the area in which the person is indicated by the radar detection information may be extracted, and the differentiation between the person and the other object may be performed based on the temperature distribution in the area corresponding to the extracted area of the radar detection information in the temperature detection information. By doing so, an amount of calculation can be reduced.

However, the differentiation unit 4 may perform learning by supervised learning using, as the input information, information about a change in the temperature distribution of the other object in time series, the temperature detection information of the person, and the physical constitution information of the person, and as the output information, the differentiation result information indicating whether the object is the person or the object, so that the correct result of differentiation between the person and the other object can be obtained. Then, based on a result of the learning, the differentiation unit 4 may differentiate whether the object present in the region corresponding to the region in which the object is indicated by the radar detection information in the temperature detection information is a person or another object. At this time, since the radar waves reflected from a person differs from the radar waves reflected from an object, the learning accuracy can be improved if radar intensity information of the radar detection information is also used as the input information.

Next, the control unit 5 controls the microphone 6 so that the direction of the microphone 6 (namely, a sound collecting direction of the microphone 6) is directed toward the differentiated person based on information indicating the result of the differentiation and position information of at least one of the position information in the point group information which is the radar detection information and the position information in the temperature distribution information which is the temperature detection information (S3).

As described above, the control system 1 and the control method according to this embodiment differentiate a person and another object using the radar detection information which enables detection of the object without identifying an individual, and the temperature detection information which makes a difference between the person and the other object without identifying the individual. Therefore, the control system 1 and the control method according to this embodiment can accurately differentiate the person and the other object while protecting privacy, and as a result, the direction of the microphone 6 toward the person can be controlled with high accuracy. Note that it is only necessary to differentiate whether the object indicated by the radar detection information is a person or another object based on the radar detection information and the temperature detection information, and the method is not limited to the above-described method.

### [Second embodiment]

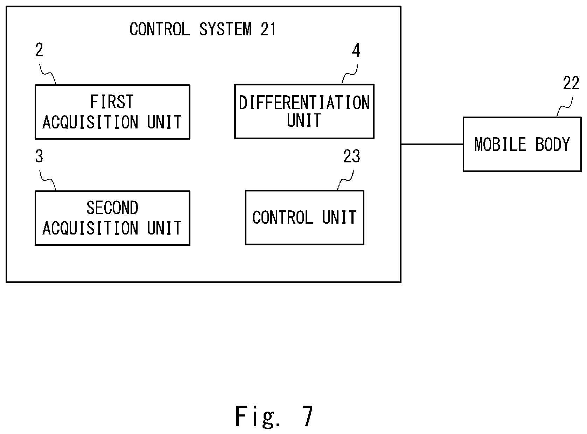

Fig. 7 is a block diagram showing a configuration of a control system according to this embodiment. Since a control system 21 shown in Fig. 7 has substantially the same configuration as that of the control system 1 according to the first embodiment, except that the control system 21 controls a mobile body 22 in place of the microphone 6, the repeated description is omitted.

The mobile body 22 is, for example, an autonomous mobile robot that moves inside the room R and can communicate with a control unit 23 of a control system 21. Then, the control unit 23 of the control system 21 controls the mobile body 22 so as to avoid the person based on information indicating a result of the differentiation and position information of at least one of the position information in the point group information which is the radar detection information and the position information in the temperature distribution information which is the temperature detection information.

It is thus possible to accurately prevent the mobile body 22 from being in contact with the person. The mobile body 22 may be a robot or the like which operates based on instruction information from the outside.

### [Third embodiment]

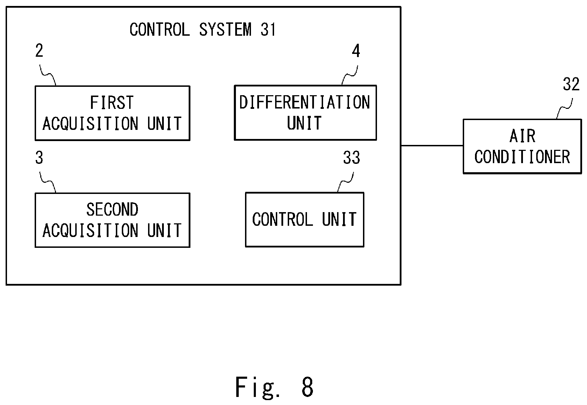

Fig. 8 is a block diagram showing a configuration of a control system according to this embodiment. Since a control system 31 shown in Fig. 8 has substantially the same configuration as that of the control system 1 according the first embodiment, except that the control system 31 controls an air conditioner 32 in place of the microphone 6, the repeated description is omitted.

The air conditioner 32 is, for example, an air conditioner installed in the room R and can communicate with a control unit 33 of the control system 31. Then, the control unit 33 of the control system 31 controls the air conditioner 32 so that a wind direction of the air conditioner 32 is directed to the differentiated person based on information indicating the result of the differentiation and position information of one of the position information in the point group information which is the radar detection information and the position information in the temperature distribution information which is the temperature detection information.

By doing so, a place where a person is present inside the room R can be selectively heated or cooled. Therefore, the air conditioner 32 can be operated efficiently, and power consumption can be reduced.

### [Fourth embodiment]

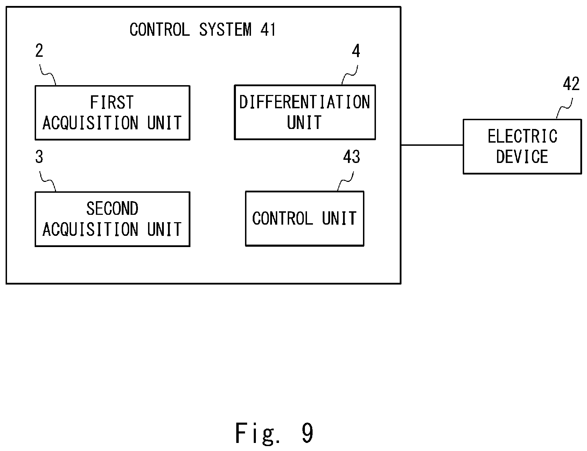

Fig. 9 is a block diagram showing a configuration of a control system according to this embodiment. Since a control system 41 shown in Fig. 9 has substantially the same configuration as that of the control system 1 according the first embodiment, except that the control system 41 controls an electric device 42, the repeated description is omitted.

The electric device 42 is, for example, an device operated by electric power such as the microphone 6, the mobile body 22, or the air conditioner 32 disposed inside the room R, and can communicate with the control unit 43 of the control system 41. When the control unit 43 of the control system 41 determines that there is no person inside the room R based on the information indicating the result of the differentiation, it controls the power supply of the electric device 42 to be OFF.

By doing so, when there is no person present in the room R, it is possible to prevent forgetting to turn off the power of the electric device 42, and thus power consumption of the electric device 42 can be reduced.

### [Other embodiment]

In the first to fourth embodiments, the present disclosure has been described as a hardware configuration, but the present disclosure is not limited to this. The present disclosure may also be implemented by causing a CPU (Central Processing Unit) to execute a computer program to process processing of each component.

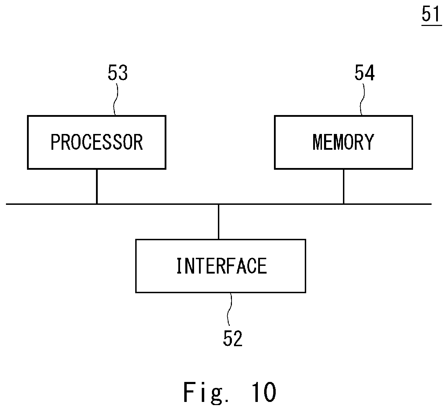

For example, the control system according to the above embodiments may include the following hardware configuration. Fig. 10 shows an example of the hardware configuration included in the control system.

An apparatus 51 shown in Fig. 10 includes an interface 52, a processor 53, and a memory 54. The control system described in the above embodiment is implemented by the processor 53 reading and executing a program stored in the memory 54. That is, this program is a program for causing the processor 53 to function as the control system according to the above-described embodiments.

The above program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks). Examples of non-transitory computer readable media further include CD-ROM (Read Only Memory), CD-R, CD-R/W. Examples of non-transitory computer readable media further include semiconductor memories (such as mask ROM, PROM, EPROM, flash ROM, RAM, etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

The above embodiments are only an example of application of the technical idea obtained by the present inventor. That is, the technical idea is not limited to the above-described embodiments, and various modifications can be made, as a matter of course.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A control system (1,21,31,41) comprising:
a first acquisition unit (2) configured to acquire radar detection information with a detection range being set within a predetermined environment;
a second acquisition unit (3) configured to acquire temperature detection information with the detection range being set within the environment;
a differentiation unit (4) configured to differentiate whether an object in the environment is a person or another object based on the radar detection information and the temperature detection information; and
a control unit (5,23,33,43) configured to control an electric device disposed in the environment based on differentiation result information of whether the object is the person or the other object.

2. The control system (1,21,31,41) according to Claim 1, wherein
the differentiation unit (4) is configured to differentiate the person and the other object based on a temperature distribution in a region corresponding to a region in which the object is indicated by the radar detection information in the temperature detection information.

3. The control system (1,21,31,41) according to Claim 2, wherein the
the differentiation unit (4) is configured to perform learning so that a correct result of the differentiation between the person and the other object can be obtained by supervised learning using, as input information, information about a change in the temperature distribution of the other object in time series, temperature detection information of the person, and physical constitution information of the person, and as output information, differentiation result information of whether the object is the person or the other object.

4. The control system (1) according to any one of Claims 1 to 3, wherein
the electric device is a microphone (6), and
the control unit is (5) configured to control the microphone (6) so that a sound collecting direction of the microphone (6) is directed toward the differentiated person.

5. The control system (21) according to any one of Claims 1 to 3, wherein
the electric device is a mobile body (22), and
the control unit (23) is configured to control the mobile body (22) to avoid the differentiated person.

6. The control system (31) according to any one of Claims 1 to 3, wherein
the electric device is an air conditioner (32), and
the control unit (33) is configured to control the air conditioner (32) so that a wind direction of the air conditioner (32) is directed to the differentiated person.

7. The control system (41) according to any one of Claims 1 to 6, wherein
the control unit (43) is configured to turn off power of the electric device (42) when it is determined there is no person in the environment based on the differentiation result information.

8. A control method comprising:
acquiring radar detection information with a detection range being set within a predetermined environment;
acquiring temperature detection information with the detection range being set within the environment;
differentiating whether an object in the environment is a person or another object based on the radar detection information and the temperature detection information; and
controlling an electric device disposed in the environment based on differentiation result information of whether the object is the person or the other obj ect.

9. A control program causing a computer to execute:
a process of acquiring radar detection information with a detection range being set within a predetermined environment;
a process of acquiring temperature detection information with the detection range being set within the environment;
a process of differentiating whether an object in the environment is a person or another object based on the radar detection information and the temperature detection information; and
a process of controlling an electric device disposed in the environment based on differentiation result information of whether the object is the person or the other object.
